# EUROPÄISCHE PATENTSCHRIFT

(11) **EP 3 025 214 B1**
(45) Veröffentlichungstag und Bekanntmachung des Hinweises auf die Patenterteilung: **05.06.2019**
(21) Anmeldenummer: 14731597.2
(22) Anmeldetag: 17.06.2014
(51) Int. Cl.: G06F 3/01, B60K 37/00

(54) **VERFAHREN ZUM BETREIBEN EINER EINGABEVORRICHTUNG, SOWIE EINGABEVORRICHTUNG**
METHOD FOR OPERATING AN INPUT DEVICE, AND INPUT DEVICE
PROCÉDÉ DE FONCTIONNEMENT D'UN DISPOSITIF D'ENTRÉE ET DISPOSITIF D'ENTRÉE

(30) Priorität: 23.07.2013 DE 102013214326
(43) Veröffentlichungstag der Anmeldung: 01.06.2016
(73) Patentinhaber: Robert Bosch GmbH, 70442 Stuttgart (DE)
(72) Erfinder: LANGENBERG, Markus, 30559 Hannover (DE); DE BOER, Gerrit, 31137 Hildesheim (DE); MODLER, Holger, 31139 Hildesheim (DE); DREUW, Philippe, 31188 Heersum (DE)
(86) Internationale Anmeldenummer: PCT/EP2014/062613
(87) Internationale Veröffentlichungsnummer: WO 2015/010829

(56) Entgegenhaltungen:
- DE-A1- 10 349 568
- DE-A1-102004 038 965
- JP-A- 2013 140 358
- US-A1- 2011 060 499
- US-A1- 2013 050 076
- US-A1- 2013 076 615
- US-B2- 8 094 189

## Beschreibung

Die Erfindung betrifft ein Verfahren zum Betreiben einer Eingabevorrichtung, insbesondere eines Kraftfahrzeugs, die einen berührungsfrei arbeitenden Sensor zum Erfassen der Position und/oder Positionsänderung mindestens eines Fingers einer Hand eines Benutzers aufweist, wobei in Abhängigkeit von der erfassten Position und/oder Positionsänderung des Fingers auf einer Eingabeoberfläche eine Eingabe erkannt und durchgeführt wird.

Ferner betrifft die Erfindung eine entsprechende Eingabevorrichtung.

### Stand der Technik

Bei modernen Kraftfahrzeugen wird häufig eine Eingabevorrichtung als kombinierte Anzeige- und Eingabeeinheit vorgesehen, beispielsweise in der Art eines Touchscreens, so dass Bedienung und Anzeige von zu bedienenden (virtuellen) Elementen an der gleichen Stelle erfolgen.

Die Anzeigeeinheit wird dabei jedoch in der Regel im oberen Bereich einer Bedienkonsole angebracht, damit sie im Blick des Fahrers liegt und dieser seinen Blick nicht zu stark vom Verkehrsgeschehen abwenden muss. Will man hierbei einen Touchscreen einsetzen, so muss sich der Fahrer für die Bedienung gegebenenfalls weit nach vorne beugen und den Arm ausstrecken, was nicht besonders ergonomisch ist und während der Fahrt leicht zu Fehlbedienungen führen kann. Einfacher ist die Möglichkeit einer Eingabe in der Nähe der Armauflage, wobei an dieser Stelle das Vorsehen eines Touchscreens ungeeignet wäre.

Gelöst wird dieser Zielkonflikt durch Systeme, bei denen die Eingabe getrennt von der Anzeige erfolgt, so dass die Eingabeeinheit an einer ergonomisch vorteilhaften Position und die Anzeigeeinheit im Blick des Fahrers angeordnet wird. Um eine gewünschte Eingabe zu erfassen, wird üblicherweise ein Berührungssensor, beispielsweise in der Art eines Touchpads verwendet. Es ist jedoch auch bereits versucht worden, die Eingabe mittels eines berührungsfrei arbeitenden Sensors zu erfassen, wobei hier der Sensor die Position und/oder Positionsänderung mindestens eines Fingers einer Hand eines Benutzers erfasst und in Abhängigkeit von der erfassten Position und/oder Positionsänderung des Fingers auf einer Eingabeoberfläche die Eingabe erkennt und durchführt. Unter dem Durchführen der Eingabe ist das Ausführen eines Steuerbefehls in Abhängigkeit von der erfassten Eingabe zu verstehen. So kann beispielsweise durch eine Klick-Bewegung das Antippen eines virtuellen Bedienelementes erkannt und die dem virtuellen Bedienelement zugeordnete Funktion, wie beispielsweise das Einschalten eines Navigationssystems, ausgeführt werden.

Bisher ist es jedoch notwendig, dass sich der Finger dabei auf der Eingabeoberfläche bewegt, um ein sicheres Erkennen der Eingabe zu ermöglichen. Bei der bekannten Lösung wurde hierzu eine entsprechende Oberfläche im Bereich der Armauflage vorbereitet, auf welcher der oder die Finger abgelegt werden können. Im Vergleich zu einem Touchpad benötigt eine derartige Eingabeeinheit kein berührungsempfindliches Element und kann allein mittels eines einzigen berührungsfrei arbeitenden Sensors die Eingabe erfassen. Nachteilig dabei ist jedoch, dass der Fahrer oder Benutzer die Eingabeoberfläche berühren und die Eingabeoberfläche in das übrige Design des Kraftfahrzeuginnenraums eingefügt werden muss. Im Hinblick auf die gestalterischen Merkmale und die vorhandenen Bauraumbedingungen kann dies schnell zu Problemen führen.

Aus US 2013/0076615 A1, DE 10349568 A1 und DE 10 2004 038 965 A1 sind Verfahren zur Gestenerkennung einer Finger- oder Handgeste im Kraftfahrzeug bekannt. Aus US 2013/0050076 A1 ist ein Verfahren zur Erkennung eines Befehls basierend auf einer Fingerbewegung bekannt.

### Offenbarung der Erfindung

Das erfindungsgemäße Verfahren mit den Merkmalen des Anspruchs 1 hat gegenüber dem Stand der Technik den Vorteil, dass die Gestaltung der Eingabevorrichtung nicht auf das Vorhandensein einer realen Eingabeoberfläche angewiesen ist, so dass die Gestaltung des Innenraums des Fahrzeugs unabhängig von einer physikalischen Eingabeoberfläche gestaltet werden kann, Erfindungsgemäß ist hierzu vorgesehen, dass in Abhängigkeit von einer vorgebbaren Bewegung mindestens eines Fingers der Hand eine virtuelle

Oberfläche als Eingabeoberfläche festgelegt wird. Es ist also vorgesehen, dass zunächst mittels eines Sensors die Bewegung eines Fingers in dem Sensorfeld erfasst und ausgewertet wird. Entspricht die Bewegung einer vorgegebenen Bewegung, so wird in Abhängigkeit dieser Bewegung eine virtuelle Oberfläche festgelegt, in deren Abhängigkeit die Eingabe erfolgt. Ein Sensor, der Tiefeninformationen liefert, ist hierfür also nicht notwendig. Stattdessen ist es dem Benutzer möglich, im Raum des Sensorfeldes die Eingabeoberfläche selbst festzulegen. Dadurch wird es für den Benutzer besonders einfach, eine Eingabe durchzuführen, da er selbst bestimmt, wo die virtuelle Oberfläche beziehungsweise die dadurch definierte Eingabeoberfläche im Raum liegt. Nachdem der Benutzer die Eingabeoberfläche festegelegt hat, muss er nur noch den Finger zur Durchführung einer Eingabe entsprechend bewegen. Durch das Festlegen der Eingabeoberfläche ist es der Eingabevorrichtung möglich, die Position beziehungsweise Positionsänderung des Fingers richtig zu deuten, ohne dass hierfür eine Tiefeninformation beziehungsweise eine dreidimensionale Erfassung der Position und/oder Positionsänderung des oder der Finger notwendig ist. Insbesondere wird es durch das erfindungsgemäße Verfahren ermöglicht, dass ein Berühren oder Antippen einer real nicht existierenden Eingabeoberfläche erfassbar ist.

Gemäß einer vorteilhaften Weiterbildung der Erfindung ist vorgesehen, dass, wenn eine Klickbewegung erfasst wird, bei welcher ein Finger aus einer ruhenden Ausgangsstellung innerhalb einer vorgebbaren Zeit in eine andere Stellung und wieder zurück in die Ausgangsstellung bewegt wird, in Abhängigkeit von der Ausgangsstellung die virtuelle Oberfläche festgelegt wird. Erfasst das System also eine entsprechende Klickbewegung, so wird in Abhängigkeit der Ausgangsstellung des Fingers die virtuelle Oberfläche festgelegt. Die Klickbewegung wird dabei ebenfalls durch den berührungsfrei arbeitenden Sensor erfasst. Auch hier ist eine dreidimensionale Erfassung des Fingers nicht notwendig, stattdessen wird bevorzugt in Abhängigkeit von der sich verändernden Kontur des Fingers bei einer Klickbewegung, beispielsweise wenn der Sensor direkt oberhalb des Fingers angeordnet ist und der Finger auf den Sensor zubewegt wird, die Bewegung ermittelt.

Besonders bevorzugt ist vorgesehen, dass auf eine Klickbewegung erkannt wird, wenn der Finger aus seiner Ausgangslage eine Auf- und Abbewegung oder eine Ab- und Aufbewegung durchführt. Vorzugsweise wird davon ausgegangen, dass bei dem Festlegen der virtuellen Oberfläche der entsprechende Finger ausgestreckt ist. Durch die Auf- oder Abbewegung verkürzt und verlängert sich die Kontur des Fingers in einer Draufsicht auf die Eingabeoberfläche. Hierdurch ermittelt die Eingabevorrichtung, ob es sich bei der Bewegung um eine Auf- oder Abbewegung handelt.

Gemäß einer vorteilhaften Weiterbildung der Erfindung ist vorgesehen, dass, wenn eine Pistolenbewegung erfasst wird, bei welcher ein Finger, insbesondere Daumen, der Hand aus seiner ruhenden Ausgangsstellung seitlich bezüglich eines anderen ausgestreckten Fingers in eine weitere Stellung bewegt wird, in Abhängigkeit von der Position des ausgestreckten Fingers die virtuelle Oberfläche festgelegt wird. In diesem Fall wird die virtuelle Oberfläche also nicht dem sich zuerst bewegten Finger zugeordnet, sondern dem ausgestreckten Finger. Bei dieser Ausführungsform ist es dem Benutzer möglich, durch das seitliche Bewegen des einen Fingers der Eingabevorrichtung mitzuteilen, dass der andere ausgestreckte Finger nunmehr die Eingabeoberfläche berührt, so dass die darauf folgende Positionsänderung des ausgestreckten Fingers erfasst und ausgewertet wird.

Bevorzugt ist vorgesehen, dass, wenn die Pistolenbewegung erfasst wird, eine Trajektorie des ausgestreckten Fingers, insbesondere seiner Fingerspitze, entlang der festgelegten virtuellen Oberfläche erfasst und ausgewertet wird. Hierdurch wird also eine Bewegung, insbesondere der Fingerspitze des Fingers verfolgt und ausgewertet. Damit ist es dem Benutzer auf einfache Art und Weise möglich, beispielsweise Buchstaben in die Luft zu zeichnen, die von der Eingabevorrichtung erkannt und entsprechend beispielsweise bei der Eingabe einer Adresse im Navigationssystem ausgewertet werden können. Ebenso kann der Benutzer hierdurch auf einfache Art und Weise unabhängig von einer real existierenden Eingabeoberfläche beispielsweise einen virtuellen Lautstärkenregler bedienen.

Ferner ist bevorzugt vorgesehen, dass, wenn erfasst wird, das nach Durchführen der Pistolenbewegung der eine Finger, insbesondere Daumen, seitlich zurück in die Ausgangsstellung bewegt wurde, das Erfassen der Trajektorie beendet wird. Damit wird auf einfache Art und Weise dem System mitgeteilt, dass die Eingabe beendet wurde. Die Bewegung aus der Ausgangsstellung heraus wird dabei bevorzugt als Aufsetzen eins Fingers oder Eingabestifts auf die
Eingabeoberfläche gewertet, während das Zurückbewegen in die Ausgangsstellung als ein Entfernen des Fingers oder der Fingerspitze von der Eingabeoberfläche gewertet wird. Insbesondere ist vorgesehen, dass es sich bei dem einen Finger um einen Daumen handelt, der durch den berührungsfrei arbeitenden Sensor von den übrigen Fingern der Hand des Benutzers unterschieden werden kann. Vorzugsweise wird der an die Hand angelegte Daumen als Ausgangsstellung und der von der Hand abgespreizte Daumen als die weitere Stellung erkannt.

Erfindungsgemäß ist vorgesehen, dass der Sensor die Position und/oder Positionsänderung des mindestens einen Fingers oder Fingerspitze innerhalb eines vorgebbaren Sensorfeldes erfasst, wobei das Sensorfeld in mindestens zwei Bereiche aufgeteilt wird, und wobei in Abhängigkeit davon, in welchem der Bereiche die vorgegebene Bewegung des Fingers durchgeführt wird, die Eingabe erfasst wird. Hierbei ist vorgesehen, dass das Sensorfeld in wenigstens zwei unterschiedliche Bereiche aufgeteilt wird, wobei ein und dieselbe Bewegung des Fingers eine unterschiedliche Eingabe zur Folge haben kann, je nachdem, in welchem der Bereiche die Bewegung des Fingers durchgeführt wird.

Erfindungsgemäß ist dabei vorgesehen, dass einer der Bereiche als Tastaturfeld und ein anderer der Bereiche als Auswahlfeld verwendet wird. Durch eine Klickbewegung am Tastaturfeld können somit einzelne Buchstaben einer einzelnen Tastatur, die vorzugsweise mittels der Anzeigeeinheit dem Benutzer dargestellt wird, bedient werden. In dem Auswahlfeld ist es dem Benutzer beispielsweise möglich Kurzbefehle durch vorgebbare Bewegungen einzugeben.

Gemäß einer bevorzugten Weiterbildung der Erfindung ist vorgesehen, dass wenigstens einem der Finger im Auswahlfeld, insbesondere unabhängig von der Position des Fingers innerhalb des Auswahlfeldes, eine Vorauswahl wenigstens einer Eingabemöglichkeit zugeordnet wird. Grundsätzlich ist bevorzugt vorgesehen, dass dem Benutzer die Position seiner Hand und seiner Finger an der Anzeigeeinheit dargestellt wird, so dass er sich orientieren und die ebenfalls durch die Anzeigeeinheit dargestellten Bedienelemente betätigen kann. Innerhalb des ebenfalls durch die Anzeigeeinheit dargestellten Auswahlfeldes werden seinen Fingern oder zumindest einem seiner Finger jeweils eine Vorauswahl einer Eingabemöglichkeit zugeordnet. So können beispielsweise vier seiner Finger jeweils eine Vorauswahl zugeordnet werden, die die wahrscheinlichsten Eingaben in der derzeitigen Situation darstellen und beispielsweise durch statistische Verfahren ermittelt werden können. Mit dem Daumen kann der Benutzer bevorzugt durch Durchführen einer Klickbewegung die Vorauswahl verändern und sich insbesondere durch unterschiedliche Vorauswahlen durchklicken, indem er mit dem Daumen entsprechende Klickbewegungen durchführt. Dadurch wird dem Benutzer die Möglichkeit gegeben, besonders schnell eine Eingabe durchzuführen.

Vorteilhafte Weiterbildungen des erfindungsgemässen Verfahrens sind durch die Ansprüche 2 bis 7 definiert.

Die erfindungsgemäße Eingabevorrichtung mit den Merkmalen des Anspruchs 8 zeichnet sich dadurch aus, dass die Eingabevorrichtung in Abhängigkeit von einer vorgebbaren Bewegung des mindestens einen Fingers eine virtuelle Oberfläche als Eingabeoberfläche festlegt. Es ergeben sich hierdurch die bereits genannten Vorteile. Zweckmäßigerweise weist die Eingabevorrichtung außerdem eine entsprechende Anzeigeeinheit auf, die dem Benutzer die Position seiner Finger in dem Sensorfeld des berührungsfrei arbeitenden Sensors darstellt,
wobei wie zuvor beschrieben bevorzugt vorgesehen ist, dass das Sensorfeld in zwei unterschiedliche Bereiche, insbesondere in ein Tastaturfeld und in ein Auswahlfeld, aufgeteilt und entsprechend auch durch die Anzeigeeinheit dargestellt wird.

Im Folgenden soll die Erfindung anhand der Zeichnung näher erläutert werden.

Dazu zeigen
- Figur 1: den Innenraum eines Kraftfahrzeugs mit einer vorteilhaften Eingabevorrichtung,
- Figur 2: ein erstes Ausführungsbeispiel einer Eingabe mittels der Eingabevorrichtung und
- Figur 3: ein zweites Ausführungsbeispiel einer Eingabe mittels der Eingabevorrichtung.

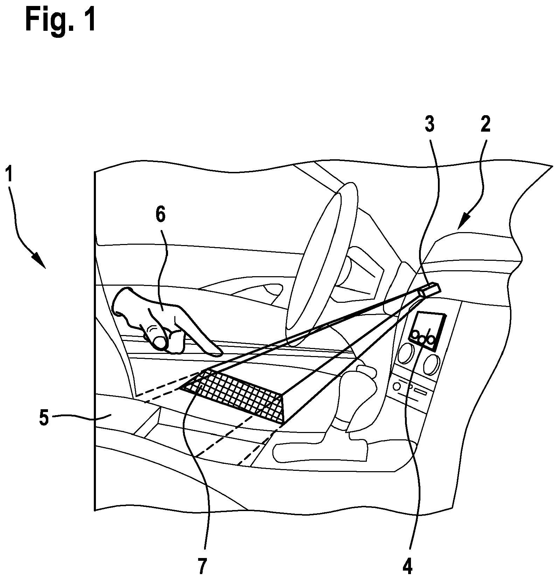

Figur 1 zeigt in einer schematischen Darstellung den Innenraum eines hier nicht näher dargestellten Kraftfahrzeugs 1, welches eine Eingabevorrichtung 2 zum berührungslosen Eingeben von Steuerbefehlen aufweist. Die Eingabevorrichtung 2 weist hierzu einen berührungsfrei arbeitenden Sensor 3 sowie eine Anzeigeeinheit 4 auf, die in das Armaturenbrett des Kraftfahrzeugs 1 eingebracht sind. Die Anzeigeeinheit 4 ist als Monitor, insbesondere Display, ausgebildet und kann beispielsweise Bestandteil eines Navigationssystems oder eines Entertainmentsystems des Kraftfahrzeugs sein. Auch ist es denkbar, die Anzeigeeinheit 4 alternativ oder zusätzlich als Head-Up-Display (HUD) auszubilden. Der berührungsfrei arbeitende Sensor 3 ist bevorzugt als zweidimensional arbeitende Videokamera ausgebildet, die den mit gestrichelten Linien dargestellten Erfassungsbereich aufweist. Die Videokamera ist dabei bevorzugt derart ausgerichtet, dass sie auf das frontseitige Ende einer mittleren Armauflage 5 weist. Die Armauflage 5 weist selbst keine reale Eingabeoberfläche auf, auf welcher ein Fahrer mittels einer hier nur schematisch dargestellten Hand 6 durch Berührung der Eingabeoberfläche einen Befehl eingeben könnte.

Die Eingabevorrichtung 2 ist stattdessen derart ausgebildet, dass der Benutzer eine virtuelle Oberfläche 7 festlegen kann, die dann als Eingabeoberfläche festgelegt wird. Hierzu hat der Benutzer verschiedene Möglichkeiten.

Bei der vorliegenden Eingabevorrichtung 2 ist weder eine physikalische Oberfläche vorgesehen, auf der eine Berührung erkannt werden kann, noch ist die Höhe der Hand im Raum bekannt. Somit lässt sich aufgrund der fehlenden physikalischen Oberfläche ein Berühren oder Tippen nicht erkennen. Die Bedienung unter Auswahl eines durch die Anzeigeeinrichtung 4 dargestellten virtuellen Bedienelementes erfolgt stattdessen in Abhängigkeit der Position und/oder Positionsänderung zumindest eines Fingers, die sich anhand des Zeitverlaufs, insbesondere der jeweiligen Fingerspitze in der Luft detektieren lässt.

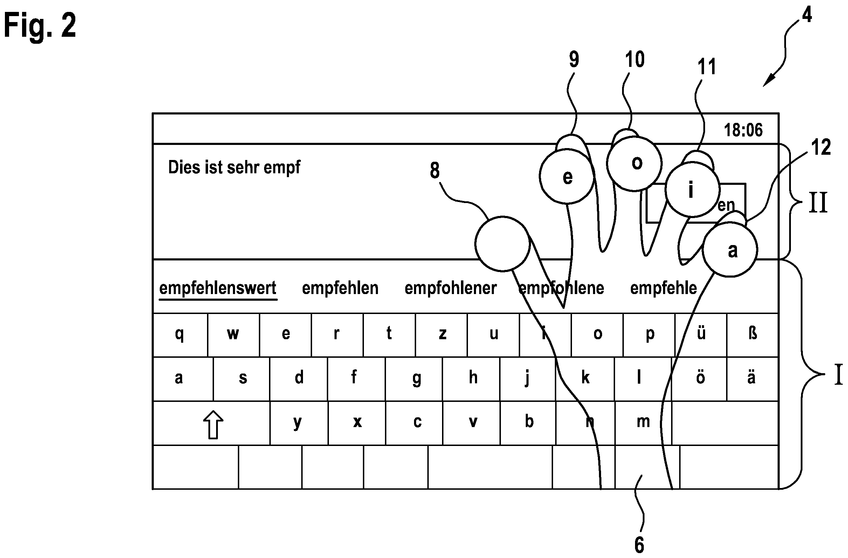

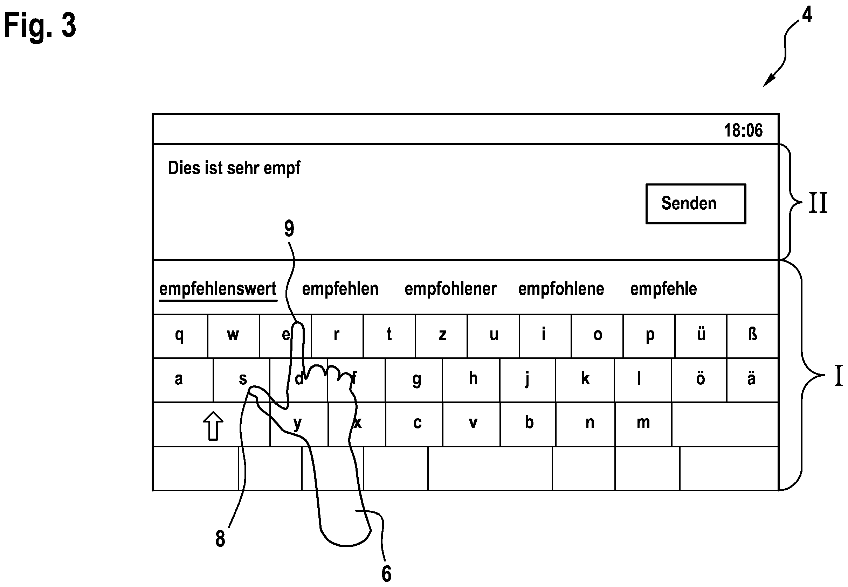

Figur 2 zeigt einen Blick auf die Anzeigeeinrichtung 4 und die dort dargestellten Elemente. Die Anzeigeeinheit 4 zeigt außerdem die mittels des Sensors 3 erfasste Hand 6 des Benutzers an, so dass ihm die Bedienung der Bedienelemente einfach fällt. Das Erfassungsfeld des Sensors 3 sowie die Anzeigeeinrichtung 4 sind in zwei Bereiche I und II aufgeteilt, denen unterschiedliche Funktionen zugeordnet sind. Der erste Bereich I bildet ein Tastaturfeld, während der zweite Bereich II ein Auswahlfeld darstellt, wobei an den zweiten Bereich der Anzeigevorrichtung 4 vorliegend ein Randabschnitt angrenzt, in welchem aktuelle Informationen, wie beispielsweise die aktuelle Uhrzeit, dargestellt werden können, wie in Figuren 2 und 3 gezeigt..

Vorliegend wird ein Finger der Hand 6 dazu genutzt, um der Eingabevorrichtung 2 mitzuteilen, wann die Eingabeoberfläche beziehungsweise die virtuelle Oberfläche 7 berührt wird. Dazu wird die Positionsänderung des Fingers verfolgt und bei Erkennen einer Klickbewegung oder Pistolenbewegung die virtuelle Oberfläche 7 als Eingabeoberfläche festgelegt.

Dabei unterscheiden sich die Eingabemöglichkeiten im vorliegenden Ausführungsbeispiel in Abhängigkeit davon, in welchem der Bereiche I oder II die Eingabe erfolgt. Durch das im Folgenden beschriebene Verfahren wird zunächst ein Tippen im freien Raum ermöglicht. Da keine Berührungserkennung vorhanden ist, lässt sich auch eine Unterscheidung zwischen "Finger hoch" und "Finger runter" nicht ohne Weiteres umsetzen, weil das System zunächst nur die Position der Finger und/oder Fingerspitzen erkennen kann, da sich die Finger permanent in der Luft befinden. Anhand der Kontur der Finger kann die Eingabevorrichtung 2 jedoch erkennen, ob der Finger bewegt wird. Verkürzt sich beispielsweise die Kontur eines Fingers, so wird darauf erkannt, dass der Finger aus seiner Ausgangsstellung auf- oder abbewegt wurde. Vorteilhafterweise wird dann die Ausgangsstellung dazu genutzt, die virtuelle Oberfläche 7 festzulegen, an der sich bevorzugt dann auch die Bewegungen der anderen Finger orientieren. Die Position der Fingerspitzen wird bevorzugt nach Verfahren ermittelt, die entlang der Handkontur nach Krümmungsradien und Abmessungen suchen, die denen einer Fingerspitze entsprechen. Darüber hinaus wird bevorzugt eine Vordergrund- /Hintergrundsegmentierung durchgeführt, um die Hand und die Fingerspitzen vom Hintergrund zu unterscheiden.

Bei dem vorliegenden Eingabekonzept wird in dem Bereich II, der an der Anzeigevorrichtung 4 vorzugsweise oberhalb des Tastaturfeldes im Bereich I angeordnet ist, den erkannten Fingerspitzen 8 bis 12 jeweils eine Auswahlfunktion zugeordnet, unabhängig davon, wo sich die Fingerspitzen in dem Bereich II befinden. Vorliegend werden dabei den Fingerspitzen 9 bis 12 anhand statistischer Verfahren die jeweils vier wahrscheinlichsten Buchstaben, Silben oder Wörter, insbesondere in Abhängigkeit eines bereits erstellten Textes beziehungsweise einer erstellten Texthistorie, zugeordnet. Durch Durchführen einer Klickbewegung mittels des jeweiligen Fingers 9 bis 12 kann der entsprechende Buchstabe ausgewählt werden. Im Anschluss an eine durchgeführte Klickbewegung werden die Auswahlfelder den Fingerspitzen 9 bis 12 neu zugeordnet, beziehungsweise entsprechend der statistischen Verfahren aktualisiert. Aufgrund der Zuordnung der wahrscheinlichsten Buchstaben, Silben oder Wörter zu den Fingerspitzen besteht stets ein ergonomischer Vorteil durch die dann Positions-unabhängige Eingabe im Raum, die besonders schnell erfolgen kann.

Ein weiterer Vorteil ergibt sich dann, wenn die aktuell weiteren möglichen Buchstabenpfade beziehungsweise -Sequenzen, die zu Wortenden in einem Wortgraphen führen würden, sich durch wenige Buchstaben unterscheiden (Silben und Wörter analog). Ein solcher Vorteil könnte dem Benutzer zusätzlich, zum Beispiel durch eine Einfärbung des Hintergrundes signalisiert werden. Auch ist es denkbar, die Texteinheiten bereits anzuzeigen, bevor die Hand in den Erfassungsbereich des Sensors gelangt ist, um sie dann beim Eintreten der Hand in die Fingerspitzenzone des Bereichs II den Fingerspitzen zuzuordnen.

Bevorzugt wird der Fingerspitze 8 des Daumens der Hand eine besondere Funktion zugeordnet. Falls sich ein gesuchter Buchstabe nicht unter den den Fingerspitzen 9 bis 12 zugeordneten Vorschlägen befindet, kann der Benutzer mittels eines seitlichen Daumenklicks, also einer Klickbewegung des Daumens, zu einer nächsten Auswahlliste von Wörtern, Buchstaben oder Silben, blättern, so dass den Fingerspitzen 9, 10, 11, 12 andere Buchstaben, Silben oder Wörter zugeordnet werden, die statistisch in der Wahrscheinlichkeit an zweiter Stelle folgen.

Im Idealfall können ganze Wörter durch wiederholtes Klicken mit einem einzigen Finger eingegeben werden. Insbesondere ist vorgesehen, dass dem Zeigefinger immer der Buchstabe mit der aktuell höchsten Wahrscheinlichkeit zugeordnet wird, so dass beispielsweise in bestimmten Fällen ein Wort vollständig nur durch Klickbewegungen des Zeigefingers eingebbar ist. Analog lässt sich dies auch für Silben oder Wörter an den Fingerspitzen darstellen.

Bevorzugt wird, wie in Figuren 2 und 3 dargestellt, zwischen den beiden Bereichen I und II, beziehungsweise in dem vorliegenden Ausführungsbeispiel in dem Bereich I, eine Vorauswahl möglicher Begriffe eingeblendet, die auf den bisher eingegebenen Buchstaben basieren, so dass der Benutzer durch ein Anklicken eines der Begriffe diesen Begriff auswählen und eingeben kann.

Werden die Fingerspitzen 8 bis 12 in den Bereich I mit dem Tastaturfeld bewegt, so werden die dort erfassten Klickbewegungen in Abhängigkeit der Position der jeweiligen Fingerspitze den dargestellten Tasten zugeordnet, so dass der Benutzer in diesen Bereich I wie auf einer Tastatur schreiben kann.

Um Gesten zu erfassen oder beispielsweise einen "Swipe-Eingabemodus" zu ermöglichen, muss ebenfalls der Eingabevorrichtung 2 mitgeteilt werden, wann sich der oder die eine Geste oder eine Swipe-Bewegung durchführende Finger auf der Oberfläche beziehungsweise der virtuellen Oberfläche 7 befindet/befinden.

Hierbei ist vorgesehen, dass eine sogenannte Pistolenbewegung erfasst wird, bei welcher der Daumen von dem ausgestreckten Zeigefinger der Hand seitlich wegbewegt beziehungsweise abgespreizt wird. Vorzugsweise wird die Pistolenbewegung nur dann erkannt, wenn nur der Zeigefinger und der Daumen ausgestreckt sind, beziehungsweise wenn alle Finger bis auf den Zeigefinger und den Daumen zur Faust geballt werden, wie in Figur 3 gezeigt.

Vorliegend ist dabei vorgesehen, dass, wenn erkannt wird, dass der Daumen aus einer an dem Zeigefinger anliegenden Ausgangsstellung seitlich in eine weitere Stellung wegbewegt wird, die Fingerspitze des Zeigefingers die virtuelle Oberfläche 7 definiert, beziehungsweise angezeigt wird, dass die Fingerspitze 9 des Zeigefingers auf der virtuellen Oberfläche 7 aufliegt. Bewegt der Benutzer nun den Zeigefinger mit der Fingerspitze 9, so wird die Trajektorie der Fingerspitze 9 erfasst und ausgewertet, Sobald der Daumen wieder in die Ausgangsstellung zurück bewegt beziehungsweise angelegt wird, wird der Eingabemodus beendet und die gezeichnete Trajektorie ausgewertet. Gemäß einem alternativen Ausführungsbeispiel wird das Verfahren andersherum gestaltet, so dass bei angelegtem Daumen die Trajektorie verfolgt und bei abgespreizten Daumen die Eingabe beendet wird. Auf diese Art und Weise können beispielsweise nacheinander mehrere Buchstaben gezeichnet und von der Eingabevorrichtung 2 mit Hilfe der entsprechenden Verfahren erkannt und eingegeben werden. Hierdurch kann der Benutzer Buchstabe für Buchstabe ein Wort in das System eingeben. Zwischen zwei Buchstaben muss lediglich der Daumen einmal kurz in die Ausgangsstellung bewegt werden, was bevorzugt als Leerzeichen erkannt wird. In diesem Fall müsste in dem Bereich I auch keine Tastatur dargestellt werden.

Mittels dieses Verfahrens ist es auch möglich, auf eine sogenannte Swipe-Bewegung über die Buchstaben des Tastaturfeldes zu erkennen. Dabei streicht der Benutzer mit der Fingerspitze 9 über die Tastatur, wobei er die Buchstaben eines Wortes in der gewünschten Reihenfolge abfährt. Das System ermittelt hieraus das gewünschte Wort. Derartige Verfahren sind grundsätzlich bei Touchscreens bereits bekannt und sollen daher an dieser Stelle nicht näher erläutert werden.

Anstelle von den Fingerspitzen 9 bis 12 zugeordneten Textbausteine, wie Buchstaben, Silben oder Wörtern, ist gemäß einem weiteren Ausführungsbeispiel (hier nicht dargestellt) vorgesehen, dass den Fingerspitzen 9 bis 12 spezielle Menü-Icons beziehungsweise Bedienelemente zugeordnet werden, um somit positionsunabhängig Bedienelemente betätigen zu können. Die Zuordnung zu den Fingerspitzen 9 bis 12 bedingt, dass die zugeordneten Elemente mit den Fingerspitzen innerhalb des Sensorerfassungsbereichs beziehungsweise insbesondere innerhalb des Bereichs II mit den Fingerspitzen mitbewegt werden. So ist es dem Benutzer auf einfache Art und Weise möglich, durch Menüs oder Untermenüs hindurch zu klicken. Auch ist es denkbar, den Fingerspitzen Favoriten zuzuordnen, wie beispielsweise häufig angesteuerte Städte bei einer Texteingabe im Navigationsmodus oder häufig gewählte Telefonnummern.

Mittels der Pistolenbewegung lässt sich beispielsweise auch das Bedienen eines Lautstärkenreglers oder das Durchscrollen durch Informations- oder Menülisten ermöglichen.

Insgesamt bieten somit das vorteilhafte Verfahren und die Eingabevorrichtung 2 eine einfache Möglichkeit, "in der Luft" auf einer virtuellen Oberfläche 7 Eingaben durchzuführen, ohne dass eine dreidimensionale Erfassung der Hand beziehungsweise der Fingerspitzen einer Hand des Fahrers notwendig ist.

## Patentansprüche

1. Verfahren zum Betreiben einer Eingabevorrichtung (2), insbesondere eines Kraftfahrzeugs, die einen berührungsfrei arbeitenden Sensor (3) zum Erfassen der Position und/oder Positionsänderung mindestens eines Fingers einer Hand eines Benutzers aufweist, wobei in Abhängigkeit von der erfassten Position und/oder Positionsänderung des Fingers auf einer Eingabeoberfläche eine Eingabe erkannt und durchgeführt wird, wobei in Abhängigkeit von einer vorgebbaren Bewegung mindestens eines Fingers der Hand (6) eine virtuelle Oberfläche (7) im Raum als Eingabeoberfläche festgelegt wird, und wobei der Sensor (3) die Position und/oder Positionsänderung des mindestens einen Fingers innerhalb eines vorgebbaren Sensorfeldes erfasst, wobei das Sensorfeld in mindestens zwei Bereiche (I,II) aufgeteilt ist, und wobei in Abhängigkeit davon, in welchem der Bereiche (I,II) die vorgegebene Bewegung des Fingers durchgeführt wird, die Eingabe erfasst wird, wobei
einer der Bereiche (I) als Tastaturfeld, während ein anderer Bereich (II) als Auswahlfeld verwendet wird.

2. Verfahren nach Anspruch 1, **dadurch gekennzeichnet, dass**, wenn eine Klickbewegung erfasst wird, bei welcher ein Finger der Hand (6) aus einer ruhenden Ausgangsstellung innerhalb einer vorgebbaren Zeit in eine andere Stellung und wieder zurück in die Ausgangsstellung bewegt wird, in Abhängigkeit von der Ausgangsstellung die virtuelle Oberfläche (7) festgelegt wird.

3. Verfahren nach Anspruch 2, **dadurch gekennzeichnet, dass** auf eine Klickbewegung erkannt wird, wenn der Finger aus der Ausgangslage eine Auf- und Abbewegung oder eine Ab- und Aufbewegung durchführt.

4. Verfahren nach Anspruch 1, **dadurch gekennzeichnet, dass**, wenn eine Pistolenbewegung erfasst wird, bei welcher ein Finger der Hand (6) aus einer ruhenden Ausgangsstellung seitlich bezüglich eines anderen ausgestreckten Fingers in eine weitere Stellung bewegt wird, in Abhängigkeit von der Position des ausgestreckten Fingers die virtuelle Oberfläche (7) festgelegt wird.

5. Verfahren nach Anspruch 4, **dadurch gekennzeichnet, dass**, wenn die Pistolenbewegung erfasst wird, eine Trajektorie des ausgestreckten Fingers entlang der festgelegten virtuellen Oberfläche (7) erfasst und ausgewertet wird.

6. Verfahren nach einem der Ansprüche 4 bis 5, **dadurch gekennzeichnet, dass**, wenn erfasst wird, dass nach Durchführen der Pistolenbewegung der eine Finger, insbesondere Daumen, seitlich zurück in die Ausgangsstellung bewegt wurde, das Erfassen der Trajektorie beendet wird.

7. Verfahren nach einem der vorhergehenden Ansprüche, **dadurch gekennzeichnet, dass** wenigstens einem der Finger im Auswahlfeld, insbesondere unabhängig von der Position des Fingers innerhalb des Auswahlfeldes, eine Vorauswahl wenigstens einer Eingabemöglichkeit zugeordnet wird.

8. Eingabevorrichtung (2), insbesondere für ein Kraftfahrzeug, mit einem berührungsfrei arbeitenden Sensor (3) zum Erfassen einer Position und/oder Positionsänderung von mindestens einem Finger einer Hand (6) eines Benutzers, wobei die Eingabevorrichtung (2) dazu ausgebildet ist, in Abhängigkeit von der Position und/oder Positionsänderung des mindestens einen Fingers auf einer Eingabeoberfläche eine Eingabe zu erkennen und durchzuführen, wobei die Eingabevorrichtung in Abhängigkeit von einer vorgebbaren Bewegung des mindestens einen Fingers eine virtuelle Oberfläche (7) im Raum als Eingabeoberfläche festlegt, wobei der Sensor (3) die Position und/oder Positionsänderung des mindestens einen Fingers innerhalb eines vorgebbaren Sensorfeldes erfasst, wobei das Sensorfeld in mindestens zwei Bereiche (I,II) aufgeteilt ist, und wobei in Abhängigkeit davon, in welchem der Bereiche (I,II) die vorgegebene Bewegung des Fingers durchgeführt wird, die Eingabe erfasst wird, wobei
einer der Bereiche (I) als Tastaturfeld, während ein anderer Bereich (II) als Auswahlfeld verwendet wird.

## Claims

1. Method for operating an input apparatus (2), in particular of a motor vehicle, that has a contactlessly operating sensor (3) for detecting a position and/or change of position of at least one finger of a hand of a user, wherein the detected position and/or change of position of the finger on an input surface is taken as a basis for detecting and performing an input, wherein a prescribeable movement of at least one finger of the hand (6) is taken as a basis for stipulating a virtual surface (7) in space as an input surface, and wherein the sensor (3) detects the position and/or change of position of the at least one finger within a prescribeable sensor field, wherein the sensor field is split into at least two areas (I, II), and wherein which one of the areas (I, II) the prescribed movement of the finger is performed in is taken as a basis for capturing the input, wherein one of the areas (I) is used as a keypad, while another area (II) is used as a selection box.

2. Method according to Claim 1, **characterized in that** if a click movement is detected, which involves a finger of the hand (6) being moved from an initial position at rest to another position and back to the initial position again within a prescribeable time, the initial position is taken as a basis for stipulating the virtual surface (7).

3. Method according to Claim 2,
**characterized in that** a click movement is detected if the finger performs an up and down movement or a down and up movement from the initial position.

4. Method according to Claim 1, **characterized in that** if a pistol movement is detected, which involves a finger of a hand (6) being moved from an initial position at rest to a further position laterally in relation to another extended finger, the position of the extended finger is taken as a basis for stipulating the virtual surface (7).

5. Method according to Claim 4, **characterized in that** if the pistol movement is detected, a trajectory of the extended finger along the stipulated virtual surface (7) is detected and evaluated.

6. Method according to either of Claims 4 and 5,
**characterized in that** if it is detected that performance of the pistol movement has been followed by one finger, in particular the thumb, being moved back to the initial position laterally, the detecting of a trajectory is terminated.

7. Method according to one of the preceding claims,
**characterized in that** at least one of the fingers in the selection box is assigned a preselection of at least one input option, in particular regardless of the position of the finger within the selection box.

8. Input apparatus (2), in particular for a motor vehicle, having a contactlessly operating sensor (3) for detecting a position and/or change of position of at least one finger of a hand (6) of a user, wherein the input apparatus (2) is designed to take the position and/or change of position of the at least one finger on an input surface as the basis for detecting and performing an input, wherein the input apparatus takes a prescribeable movement of the at least one finger as a basis for stipulating a virtual surface (7) in space as an input surface, wherein the sensor (3) detects the position and/or change of position of the at least one finger within a prescribeable sensor field, wherein the sensor field is split into at least two areas (I, II), and wherein which one of the areas (I, II) the prescribed movement of the finger is performed in is taken as a basis for capturing the input, wherein one of the areas (I) is used as a keypad, while another area (II) is used as a selection box.

## Revendications

1. Procédé pour faire fonctionner un dispositif de saisie (2), notamment d'un véhicule automobile, qui possède un capteur (3) fonctionnant sans contact servant à détecter la position et/ou un changement de position d'au moins un doigt d'une main d'un utilisateur, une saisie étant reconnue et exécutée en fonction de la position et/ou du changement de position détecté du doigt sur une interface de saisie, une interface virtuelle (7) étant définie dans l'espace en tant qu'interface de saisie en fonction d'un mouvement pouvant être prédéfini d'au moins un doigt de la main (6), et le capteur détectant la position et/ou le changement de position de l'au moins un doigt à l'intérieur d'un champ de capteur pouvant être prédéfini, le champ de capteur étant divisé en au moins deux zones (I, II), et la saisie étant détectée en fonction de la zone (I, II) dans laquelle est exécuté le mouvement prédéfini du doigt, l'une des zones (I) étant utilisée en tant que clavier et une autre zone (II) en tant que champ de sélection.

2. Procédé selon la revendication 1, **caractérisé en ce que** lorsqu'un mouvement de clic est détecté, lors duquel un doigt de la main (6) est déplacé depuis une position initiale au repos dans une autre position puis retour à la position initiale dans une durée pouvant être prédéfinie, l'interface virtuelle (7) est définie en fonction de la position initiale.

3. Procédé selon la revendication 2, **caractérisé en ce qu'**un mouvement de clic est reconnu lorsque le doigt, depuis la position initiale, effectué un mouvement de montée et de descente ou un mouvement de descente et de montée.

4. Procédé selon la revendication 1, **caractérisé en ce qu'**un mouvement de pistolet est détecté, lors duquel un doigt de la main (6) est déplacé depuis une position initiale au repos dans une autre position latéralement par rapport à un autre doigt tendu, l'interface virtuelle (7) est définie en fonction de la position du doigt tendu.

5. Procédé selon la revendication 4, **caractérisé en ce que** lorsque le mouvement de pistolet est détecté, une trajectoire du doigt tendu le long de l'interface virtuelle (7) définie est détectée et interprétée.

6. Procédé selon l'une des revendications 4 à 5, **caractérisé en ce que** la détection de la trajectoire prend fin lorsque, après avoir effectué le mouvement de pistolet, un mouvement dudit doigt, notamment du pouce, latéralement en retour dans la position initiale est détecté.

7. Procédé selon l'une des revendications précédentes, **caractérisé en ce qu'**une présélection d'au moins une possibilité de saisie est associée à au moins l'un des doigts dans le champ de sélection, notamment indépendamment de la position du doigt à l'intérieur du champ de sélection.

8. Dispositif de saisie (2), notamment pour un véhicule automobile, comprenant un capteur (3) fonctionnant sans contact servant à détecter une position et/ou un changement de position d'au moins un doigt d'une main (6) d'un utilisateur, le dispositif de saisie (2) étant configuré pour reconnaître et exécuter une saisie en fonction de la position et/ou du changement de position de l'au moins un doigt sur une interface de saisie, le dispositif de saisie définissant une interface virtuelle (7) dans l'espace en tant qu'interface de saisie en fonction d'un mouvement pouvant être prédéfini de l'au moins un doigt, le capteur (3) détectant la position et/ou le changement de position de l'au moins un doigt à l'intérieur d'un champ de capteur pouvant être prédéfini, le champ de capteur étant divisé en au moins deux zones (I, II), et la saisie étant détectée en fonction de la zone (I, II) dans laquelle est exécuté le mouvement prédéfini du doigt, l'une des zones (I) étant utilisée en tant que clavier et une autre zone (II) en tant que champ de sélection.
